# EUROPÄISCHE PATENTSCHRIFT

(11) **EP 2 450 389 B1**
(45) Veröffentlichungstag und Bekanntmachung des Hinweises auf die Patenterteilung: **18.03.2015**
(21) Anmeldenummer: 10014383.3
(22) Anmeldetag: 08.11.2010
(51) Int. Cl.: C08G 18/80, C08J 5/06

(54) **Haftvermittler für textile Verstärkungseinlagen und dessen Verwendung**
Adhesion promoter for textile reinforcing inserts and their use.
Promoteur d'adhesion pour inserts de renforcement textile et leur application.

(43) Veröffentlichungstag der Anmeldung: 09.05.2012
(73) Patentinhaber: EMS-Patent AG, 7013 Domat/Ems (CH)
(72) Erfinder: Kaplan, Andreas, 7000 Chur (CH)
(74) Vertreter: Pfenning, Meinig & Partner GbR

(56) Entgegenhaltungen:
- EP-A1- 1 038 899
- EP-A1- 2 159 241
- WO-A1-2007/100399

## Beschreibung

Die Erfindung betrifft einen pulverförmigen, in Wasser dispergierbaren Haftvermittler für textile Verstärkungseinlagen zur Herstellung von verstärkten Gummiprodukten. Der Haftvermittler enthält dabei ein zumindest teilweise verkapptes, niedermolekulares Isocyanat, ein Netzmittel, ein Bindemittel sowie ggf. weitere Additive.

Bei der Herstellung von faserverstärkten Gummiprodukten hat es sich als vorteilhaft erwiesen, wenn zur Verbesserung der Haftfestigkeit zwischen textiler Verstärkungseinlage und dem Kautschuk ein Haftvermittler eingesetzt wird. Wichtig ist der Einsatz eines derartigen Haftvermittlers, insbesondere im Bereich von Reifencord und anderen hochbelasteten Verbundwerkstoffen mit Verstärkungsfasern. Insbesondere für diese Anwendungsgebiete ist es aus dem Stand der Technik bekannt, Resorcin-Formaldehyd-Latexsysteme (RFL) zur Verbindung von synthetischen oder natürlichen Fasern zu Gummiprodukten einzusetzen. Verfahrensmäßig kann dabei entweder in einem Ein-Schritt- oder in einem Zwei-Schrittverfahren vorgegangen werden. Beim Ein-Schrittverfahren wird eine Imprägnierung des Verstärkungselementes mit einer Mischung aus RFL und einem Haftvermittler durchgeführt.

Beim Zwei-Schrittverfahren wird zuerst eine Imprägnierung des Verstärkungselementes mit dem Haftvermittler vorgenommen und in einem zweiten Schritt erfolgt die Applikation von RFL.

Aus dem Stand der Technik sind für derartige Verfahren auch schon speziell abgestimmte Haftvermittler bekannt.

Die DE 199 13 042 A1 beschreibt einen Haftvermittler für die Behandlung von Verstärkungseinlagen zur Herstellung von verstärkten Gummiprodukten in Form einer wässrigen Dispersion. Die Haftvermittler basieren dabei auf Isocyanaten.

Aus der WO 2007/100 399 sind Resorcinol-blockierte Isocyanat-Zusammensetzungen bekannt, die hohe Haftvermittlergehalte aufweisen.

Die Aufgabe der vorliegenden Erfindung war es, Haftvemittler in Form freifliessender, staubarmer Pulver bereitzustellen, welche in Wasser dispergierbar sind, wobei sich die Teilchengrösse verringert.

Diese Aufgabe wird durch den Haftvermittler mit den Merkmalen des Anspruchs 1 und das Verfahren zur Her stellung eines Haftvermittlers mit den Merkmalen des Anspruchs 13 gelöst. Die weiteren abhängigen Ansprüche zeigen vorteilhafte Weiterbildungen auf. In Anspruch 14 wird eine erfindungsgemäße Verwendung des Haftvermittlers angegeben.

Erfindungsgemäß wird ein pulverförmiger, in Wasser dispergierbarer Haftvermittler für textile Verstärkungseinlagen bereitgestellt, der aus den folgenden Komponenten besteht:
(A) 35 - 95 Gew.-% mindestens eines zumindest teilweise verkappten, niedermolekularen Isocyanats, wobei das zu verkappende Isocyanat eine Molmasse von weniger oder gleich 500 g/mol
(B) 0,1 - 10 Gew.-% mindestens eines Netzmittels,
(C) 5 - 40 Gew.-% mindestens eines Bindemittels,
(D) 0 - 5 Gew.-% mindestens eines Katalysators und
(E) 0 - 10 Gew.-% mindestens eines Additivs.

Hierbei addieren sich die Anteile der Komponenten (A) bis (E) zu 100 Gew.-%.

Der Begriff zumindest teilweise verkapptes, niedermolekulares Isocyanat umfasst beides, teilweise blockierte, niedermolekulare Isocyanate und vollständig blockierte, niedermolekulare Isocyanate. Die Begriffe verkappt bzw. blockiert haben dabei die gleiche Bedeutung.

Erfindungsgemäß konnten somit erstmals pulverförmige Haftvermittler bereitgestellt werden, die in Wasser dispergierbar sind. Diese fließfähigen Pulver können durch thermische Trocknungsverfahren, insbesondere durch eine Sprühtrocknung, Fliessbetttrocknung, Wirbelschichtsprühtrocknung, Wirbelschichtsprühgranulation oder Wirbelschichttrocknung, hinsichtlich ihrer Partikelgröße eingestellt werden. Einflussgrößen sind dabei zum Beispiel die Sprühturmhöhe oder die Verweilzeit. Die thermische Trocknung kann sowohl kontinuierlich, als auch diskontinuierlich erfolgen. Die erstmalige Bereitstellung von fließfähigen, staubar men, dispergierbaren Pulvern ermöglicht somit eine deutlich bessere Lagerstabilität gegenüber wässrigen Dispersionen, wie sie z.B. in der DE 199 13 042 A1 beschrieben sind. Damit verbunden sind auch deutliche Vorteile hinsichtlich der Handhabbarkeit der erfindungsgemäßen Haftvermittler, z.B. keine Gefahr der Entmischung, kein Transport von überflüssigem Gewicht, geringeres Transportvolumen, kein Einfrieren bei Temperaturen unter Null Grad Celsius, kein Absetzten wie bei Dispersionen und somit eine längere Haltbarkeit.

Eine bevorzugte Ausführungsform des Haftvermittlers sieht vor, dass dieser aus folgenden Komponenten besteht:
(A) 52 bis 90 Gew.-% mindestens eines zumindest teilweise verkappten, niedermolekularen Isocyanats, wobei das zu verkappende Isocyanat eineMolmasse von weniger oder gleich 500 g/mol
(B) 0,5 bis 8 Gew.-% mindestens eines Netzmittels,
(C) 10 bis 30 Gew.-% mindestens eines Bindemittels,
(D) 0,1 bis 5 Gew.-% mindestens eines Katalysators und
(E) 0,1 bis 5 Gew.-% mindestens eines Additivs.

Eine besonders bevorzugte Ausführungsform des Haftvermittlers besteht aus:
(A) 61 bis 84 Gew.-% mindestens eines zumindest teilweise verkappten, niedermolekularen Isocyanats, wobei das zu verkappende Isocyanat eineMolmasse von weniger oder gleich 500 g/mol
(B) 1 bis 6 Gew.-% mindestens eines Netzmittels,
(C) 15 bis 25 Gew.-% mindestens eines Bindemittels,
(D) 0,5 bis 4 Gew.-% mindestens eines Katalysators und
(E) 0,2 bis 4 Gew.-% mindestens eines Additivs.

Eine weitere bevorzugte Ausführungsform sieht vor, dass das dispergierbare Pulver einen mittleren Partikeldurchmesser im Bereich von 50 bis 5000 µm, bevorzugt im Bereich von 100 bis 800 µm und besonders bevorzugt im Bereich von 200 bis 500 µm aufweist.

Es ist weiter bevorzugt, dass das mindestens eine zu verkappende niedermolekulare Isocyanat, d.h. das Isocyanat vor der zumindest teilweisen Verkappung, eine Molmasse im Bereich von 90 bis 400 g/mol und bevorzugt im Bereich von 150 bis 300 g/mol aufweist.

Niedermolekulare Isocyanate zeigen gegenüber polymeren Isocyanaten, höhere Reaktivität, bessere Dispergierbarkeit, einfachere Herstellung und einfachere Verfügbarkeit.

Der Haftvermittler enthält als zu verkappendes niedermolekulares Isocyanat, d.h. das Isocyanat vor der zumindest teilweisen verkappung, vorzugsweise ein aromatisches, aliphatisches oder cycloaliphatisches Isocyanat. Dieses ist besonders bevorzugt ausgewählt aus der Gruppe bestehend aus 4,4-Diphenylmethandiisocyanat (4,4-MDI), 2,4-Diphenylmethandiisocyanat (2,4-MDI), 3,4-Di-phenylmethandiisocyanat (3,4-MDI), 2,2-Diphenylmethandiisocyanat (2,2-MDI), 2,3-Diphenylmethandiisocyanat (2,3-MDI), 2,4-Toluoldiisocyanat, 2,6-Toluoldiisocyanat, 1-Isocyanato-3-Isocyanatomethyl-3,5,5-Trimethylcyclohexan, 1,4-Naphthalindiisocyanat (1,4-NDI), 1,5-Naphthalindiisocyanat (1,5-NDI), Isophorondiisocyanat (IPDI), Hexamethylendiisocyanat (HDI) oder Mischungen hiervon.

Das mindestens eine zumindest teilweise verkappte, niedermolekulare Isocyanat ist teilweise oder vollständig blockiert. Als Blockierungsmittel werden hier insbesondere Verbindungen aus der Gruppe bestehend aus Monophenolen, insbesondere Phenol, Resorcin, Kresol, Trimethylphenole oder tert. Butylphenole, Lactamen, insbesondere ε-Caprolactam, δ-Valerolactam oder Laurinlactam, Oximen, insbesondere Methyl-Ethyl-Ketoxim (Butanonoxim), Methyl-Amyl-Ketoxim oder Cyclohexanonoxim, leicht enolbildende Verbindungen, insbesondere Acetoessigester, Acetyl-aceton oder Malonsäurederivate, primäre, sekundäre oder tertiäre Alkohole, Glykolether, sekundäre aromatische Amine, Imide, Merkaptane, Triazole sowie Mischungen hiervon, eingesetzt.

Vorzugsweise ist das mindestens eine Netzmittel ausgewählt aus der Gruppe bestehend aus anionischen Tensiden, kationischen Tensiden, nicht-ionischen Tensiden, amphoteren Tensiden, siliciumhaltigen Tensiden, Perfluortensiden, hydrophil modifizierten Polyolefinen und Mischungen hiervon.

Die Tenside sind vorzugsweise ausgewählt aus der Gruppe bestehend aus Seifen, Alkylbenzolsulfonate, lineare Alkylbenzolsulfonate, Alkansulfonate, Estersulfonate, Methylestersulfonate, Sulfobernsteinsäurederivate, α-Olefinsulfonate, Alkylsulfate, Fettalkoholsulfate, Fettalkoholethersulfate, Fettalkoholpolyglycolethersulfate, Fettalkoholpolyglycolether, Dioctylnatriumsulfosuccinat, Alkylphenolpolyglycolether, Sorbitanfettsäureester, ethoxylierte Sorbitanfettsäureester, Alkylpolyglucoside, Fettsäureglucamide, Fettsäureethoxylate, Fettaminethoxylate, ethoxylierte Triacylglycerole, beidseitig alkylierte Polyethylenglycolether, Alkoholethoxylate, Nonylphenolethoxylate, Polyglycerolfettsäureester, Fettsäurealkanolamide, Aminoxide, Alkyldimethylaminoxide, Alkylpolyglucoside, Saccharoseester, Sorbitanester, Fettsäureglucamide, Fettsäure-N-methylglucamide, Ampholyte, Betaine, Sulfobetaine, N-(Acylamido-alkyl)betaine, N-Alkyl-β-aminopropionate, N-Alkyl-β-iminopropionate, Salze langkettiger primärer Amine, quartäre Ammoniumsalze, quartäre Phosphoniumsalze, tertiäre Sulfoniumsalze, Pyridiniumsalze, Imidazoliniumsalze, Oxazoliniumsalze, Esterquats, Polyalkylenglycole, alkoxylierte Polyalkylenglycole, Polysulfone, Poly(2-hydroxyalkylacrylate), Poly(2-hydroxyalkylmethacrylate), Ethylenoxid-Propylenoxid-Blockcopolymere, Polyethylenglycole, Polypropylenglycole, Polyethylenoxid-Harze, Polypropylenoxide, Salze von Oligophosphaten, Salze von Polyphosphaten und Mischungen hiervon.

Die hydrophil modifizierten Polyolefine sind vorzugsweise ausgewählt aus der Gruppe bestehend aus Ethylenacrylsäurecopolymere, Ethylenmethacrylsäurecopolymere, Ethylenmethacrylsäureacrylatcopolymere, Ethylenacrylsäureacrylatcopolymere, Ethylenmethacrylatcopolymere, Ethylenacrylatcopolymere, Ethylenmaleinsäurecopolymere, Polyacrylsäure, Polymethacrylsäure, Polyacrylamid, Polymethacryolamid, Polyvinylsulfonsäuren, Melaminformaldehydsulfonate, Naphthalinformaldehydsulfonate, oxidiertes Polyethylen, mit Maleinsäure gepfropfte Ethylencopolymere, Styrol-Acrylat-Copolymere und Mischungen oder Copolymere hiervon.

Die hydrophil modifizierten Polyolefine enthalten dabei vorzugsweise 5 bis 40 mol-%, bevorzugt 10 bis 30 mol-% und besonders bevorzugt 15 bis 25 mol-% eines mindestens eine hydrophile Gruppe tragenden Monomeren.

Werden als Netzmittel Salze eingesetzt, so sind die Kationen vorzugsweise ausgewählt aus der Gruppe bestehend aus Natrium-Ionen, Kalium-Ionen und AmmoniumIonen.

Das mindestens eine Bindemittel ist charakterisiert durch seine Bindefähigkeit, Wasserlöslichkeit und thermische Beständigkeit.

Das Bindemittel besitzt eine thermische Beständigkeit bis zu einer Temperatur von mindestens 120 °C, bevorzugt mindestens 140 °C, besonders bevorzugt mindestens 160 °C.

Der Einsatz eines Bindemittels, wie er erfindungsgemäß vorgenommen wird, ermöglicht die Bereitstellung eines Haftvermittlers in Form eines fließfähigen, staubarmen Pulvers, welches in Wasser dispergierbar ist.

Vorzugsweise ist das mindestens eine Bindemittel ausgewählt aus der Gruppe bestehend aus Vinylalkohol-Vinylacetat-Copolymere, Polyvinylpyrolidone, Polyvinylalkohole, Polyacrylsäuresalze, Salze von Polyacrylsäurecopolymeren, Polysaccharide, Stärke, Cellulose, Guar, Tragcantinsäure, Dextran, Alginate und deren Carboxymethyl-, Methyl-, Hydroxyethyl-, Hydroxypropyl-Derivate, Casein, Sojaprotein, Gelatine, Ligninsulfonate und Mischungen hiervon.

Insbesondere ist das mindestens eine Bindemittel ausgewählt aus der Gruppe bestehend aus Polyvinylalkohole, Polyacrylsäuresalze, Salze von
Polyacrylsäurecopolymeren und Mischungen hiervon.

Die Polyvinylalkohole besitzen einen Hydrolysegrad von 75 bis 90 mol-%, bevorzugt von 84 bis 89 mol-%, insbesondere von 86 bis 89 mol-%. Bei Hydrolysegraden über 90 mol-% sinkt die Wasserlöslichkeit.

Der Polymerisationsgrad der Polyvinylalkohole liegt bei 100 bis 2500, bevorzugt bei 250 bis 2000, besonders bevorzugt bei 300 bis 1400, insbesondere bei 400 bis 1100.

Die mittlere Molmasse (Gewichtsmittel) der Polyvinylalkohole liegt bei 4000 bis 100000 g/mol, bevorzugt bei 10000 bis 80000 g/mol, besonders bevorzugt bei 12000 bis 56000 g/mol, insbesondere bei 16000 bis 44000 g/mol.

Bei den Polyacrylsäurecopolymeren sind Copolymere mit Maleinsäureanhydrid, Acrylsäureestern, Methacrylsäureester, Styrol, Norbornen-Derivate und/oder Olefinen bevorzugt. Unter den Olefinen sind Ethen, Propen, Buten bevorzugt.

Bei den Polyacrylsäuresalzen und Salzen von Polyacrylsäurecopolymeren sind die Kationen vorzugsweise ausgewählt aus der Gruppe bestehend aus Natrium-Ionen, Kalium-Ionen, Magnesium-Ionen, Calcium-Ionen, Zinn-Ionen, Barium-Ionen, Lithium-Ionen, ZinkIonen und Mischungen davon.

Der mindestens eine Katalysator ist vorzugsweise ausgewählt aus der Gruppe der Metallverbindungen der Metalle Natrium, Kalium, Cäsium, Strontium, Silber, Cadmium, Barium, Cer, Uran, Titan, Chrom, Zinn, Antimon, Mangan, Eisen, Kobalt, Nickel, Kupfer, Zink, Blei, Calcium und/oder Zirkon. Besonders bevorzugt ist der mindestens eine Katalysator ausgewählt aus der Gruppe bestehend aus Zinkacetat, Zinksulfat, Zinkcarbonat, Zinkoxid, Zinkacetylacetonat und/oder Zinkchlorid.

Das mindestens eine Haftvermittler enthaltende Additiv vorzugsweise ausgewählt aus der Gruppe bestehend aus
Entschäumern, insbesondere langkettigen Alkoholen, hochpolymeren Glykolen, Fettsäureethoxylaten, Trialkylmethylaminen, Siliconen oder Mischungen davon, besonders bevorzugt Silicone in Form von Silicon-Emulsionen,
Farbstoffen, insbesondere Ruß,
Füllstoffen, insbesondere Silikate,
sowie Mischungen hiervon.

Erfindungsgemäß wird ebenso ein Verfahren zur Herstellung der zuvor beschriebenen Haftvermittler bereitgestellt. Die Herstellung der Dispersion erfolgt, indem die in Tabelle 2 aufgeführten Komponenten in einem Rührbehälter unter Vorlage des deionisierten Wassers und des Benetzungsadditives mit anschliessender Zugabe der Dispersion des verkappten, niedermolekularen Isocyanates gemischt werden, wobei gerührt wird. Die übrigen Additive werden, ebenfalls unter Rühren, nacheinander zugegeben. Die Dispersion wird anschliessend in einer Mühle, bevorzugt einer Rührwerkskugelmühle auf die gewünschte Partikelgrösse gemahlen.

Die Wirbelschichtsprühtrocknung wird in Stickstoffatmosphäre durchgeführt, wobei eine Stickstofftemperatur von 80 °C bis 230 °C, bevorzugt von 120 °C bis 190 °C, besonders bevorzugt von 140 °C bis 180 °C verwendet wird. Der Druck mit dem die Dispersion eingesprüht wird, liegt bei 1 bar bis 3 bar, bevorzugt bei 1,2 bar bis 2 bar. Die Dispersion wird in Mengen von 1,5 g/min bis 35000 g/min dosiert, wobei die zu dosierende Menge von der Anlagengrösse und dem Feststoffgehalt der Dispersion abhängt. Je höher der Feststoffgehalt, desto höher die Dosiermenge. Die Produkttemperatur stellt sich in Abhängigkeit der verwendeten Stickstofftemperatur und der Dosiermenge ein. Sie sollte im Bereich von 30 °C bis 190 °C, bevorzugt von 50 °C bis 120 °C liegen. Die Wirbelschicht wird in Form von bereits vorhandenem Produkt vorgelegt. Sollte dies nicht möglich sein, muss sie zu Beginn der Trocknung aus der zu trocknenden Dispersion erzeugt werden. Dies erfolgt mit einer niedrigen Dosierrate. Sobald die Wirbelschicht vorhanden ist, werden mit steigender Dosierrate die Partikel aufgebaut. Die gebildeten Partikel zeigen, z.B. eine Zwiebel- oder Brombeerstruktur. Wobei die Brombeerstruktur bevorzugt ist, da sie leichter dispergiert.

Erfindungsgemäß werden die Haftvermittler, wie sie zuvor beschrieben wurden, für die Behandlung von Verstärkungseinlagen zur Herstellung von verstärkten Gummiprodukten eingesetzt. Der erfindungsgemäße Haftvermittler ist besonders geeignet für textile Verstärkungseinlagen, z.B. aus Polyester, Polyethylen, Polyamid, Ryon, Baumwolle, Bastfasern, Sisal, Hanf, Flachs oder Kokosfasern. Diese so behandelten Verstärkungseinlagen werden insbesondere zur Herstellung von Reifencord, Transportband, Keilriemen, mechanischen Gummiteilen oder Composites eingesetzt.

Die Dispergiereingenschaften des erhaltenen Pulvers werden wie folgt bestimmt:
In einem Becherglas wird deionisiertes Wasser vorgelegt und dieses mit einem Magnetrührwerk gerührt. Die zu dispergierende Probe wird zugegeben. Die Dispergierbarkeit wird nach 1 min und nach 10 min visuell beurteilt und mit Zahlen von 0 bis 100 bewertet, wobei 0 keine Dispergierung und 100 vollständige Dispergierung bedeutet.

Die Korngrössenverteilung (d₅₀- und d₉₅-Wert) der nach 10 min erhaltenen Dispersion wird mittels Lasermessung nach ISO 13320 bestimmt. Dies erfolgt sowohl ohne, als auch mit Verwendung von 30 s Ultraschall.

Für eine gute Haftvermittlerwirkung darf der d₅₀-Wert maximal 8 µm, bevorzugt maximal 5 µm, besonders bevorzugt maximal 2 µm betragen.

Für eine gute Haftvermittlerwirkung darf der d₉₅-Wert maximal 20 µm, bevorzugt maximal 10 µm, besonders bevorzugt maximal 5 µm betragen.

Anhand der nachfolgenden Beispiele soll der erfindungsgemäße Gegenstand näher erläutert werden, ohne diesen auf die hier gezeigten speziellen Ausführungsformen einschränken zu wollen.

Tabelle 1 zeigt die in den Beispielen und dem Vergleichsbeispiel verwendeten Materialien.

**Tabelle 1**

| Komponente | Handelsname | Beschreibung | Hersteller |
|---|---|---|---|
| niedermolekulares Isocyanat | Grilbond IL-6 | niedermolekulares mit Caprolactam ver-kapptes 4,4'-Diphenylmethan-diisocyanat 50 gew.-%ige wässri-ge Dispersion | EMS-CHEMIE AG, Schweiz |
| Netzmitttel | Tamol NN 8906 | Natriumsalz von Naphthalinsulfonsäur epolykondensat, pulverförmig Teilchengrösse: 70 Gew-% im Bereich 63 - 200 micrometer Natriumsulfatgehalt 6 % | BASF, Deutschland |
| Bindemittel | Mowiol 4-88 * | Polyvinylalkohol Mw** 31000 87 - 89 % hydrolysiert | Kuraray Europe GmbH, Deutschland |
| Katalysator | - | Zinkacetylacetonat-Hydrat Schmelzpunkt 135 -138 °C pulverförmig | Sigma-Aldrich, Schweiz |
| Entschäumer | Dow Corning DSP Antifoam Emulsion*** | siliconhaltige Entschäumer-Emulsion Viskosität**** 1500 mPas bei 25 °C | Dow Corning, Belgien |

| | | | |
|---|---|---|---|
| * verwendet als 25 gew.-%ige wässrige Lösung ** Gewichtsmittel der Molmasse in g/mol *** verwendet als 10 gew.-%ige wässrige Lösung **** Brookfieldspindel Nr. 3 bei 20 Umdrehungen pro Minute | | | |

Die Wirbelschichtsprühtrocknung der Dispersionen wurde auf einer Wirbelschicht Laboranlage vom Typ WPF-Mini der Firma DMR Prozesstechnologie (Dresden, Deutschland) in Stickstoffatmosphäre durchgeführt. Dabei wurden folgende Einstellungen verwendet:

| | |
|---|---|
| Temperatur Stickstoff: | 160 °C |
| Stickstoffdurchsatz: | 15 - 18 m³/h |
| Sprühdruck: | 1.5 bar |
| Dosierrate Dispersion: | 1.5 - 7.5 g/min |
| Versuchsdauer: | 2.5 h |

In der ersten Phase von 1.5 h wurde die Wirbelschicht aufgebaut. Dann wurde die Dispersion mit steigender Dosierrate versprüht und die Partikel aufgebaut. Während des Versuchs stellte sich eine Produkttemperatur von 55 - 62 °C in der Wirbelschicht ein. Es bildeten sich Partikel mit einer Brombeerstruktur.

| | |
|---|---|
| Partikelgrösse: | 200 - 350 µm |
| Restfeuchte: | 0.9 % |

### Beispiele 1 und 2

In Tabelle 2 sind die Zusammensetzungen zweier erfindungsgemässer Haftvermittler (Beispiele 1 und 2) aufgeführt.

**Tabelle 2**

| | Beispiel 1 | | Beispiel 2 | |
|---|---|---|---|---|
| | als Dispersion Gew.-Teile | als Trockensubstanz Gew.-% | als Dispersion Gew.-Teile | als Trockensubstanz Gew.-% |
| niedermolekulares Isocyanat 50 gew.-%ige Dispersion | 133 | 66,5 | 151,94 | 75,97 |
| Netzmittel | 3,5 | 3,5 | 2,5 | 2,5 |
| Bindemittel 25 gew.-%ige Lösung | 120 | 30 | 100 | 20 |
| Katalysator | - | - | 1,5 | 1,5 |
| Additiv (Entschäumer) 10 gew.-%ige Lösung | - | - | 0,3 | 0,03 |
| Wasser | 29,5 | - | 29,5 | - |
| Feststoffgehalt | 35% | 100% | 35% | 100% |

Der d₅₀- bzw. d₉₅-Werte der Korngrösse betrug bei der Dispersion von Beispiel 1 ohne Ultraschall 1,0 bzw. 2,1 µm und 1,0 bzw. 2,0 µm mit Ultraschall.

Der d₅₀- bzw. d₉₅-Werte der Korngrösse betrug bei der Dispersion von Beispiel 2 ohne Ultraschall 1,0 bzw. 2,0 µm und 0,8 bzw. 1,8 µm mit Ultraschall.

### Vergleichsbeispiel 3

In Tabelle 3 ist die Zusammensetzung eines Vergleichsbeispiels analog zur DE 199 13 042 A1 angegeben.

**Tabelle 3**

| | Vergleichsbeispiel 3 | |
|---|---|---|
| | als Dispersion Gew.-Teile | als Trockensubstanz Gew.-% |
| niedermolekulares Isocyanat 50 gew.-%-ige Dis-persion | 100 | 42,7 |
| Netzmittel | 7 | 6 |
| niedermolekulares Isocyanat, pulverformig | 60 | 51, 3 |
| Feststoffgehalt | 70% | 100% |

Die Korngrösse der Dispersion betrug bei d₅₀ 0,9 und bei d₉₅ 2, 3 µm.

Vom erhaltenen Produkt wurden die Dispergiereigenschaften nach folgender Vorgehensweise geprüft:
48.25 g deionisiertes Wasser wurden einem 100mL-Becherglas vorgelegt. Auf einem Magnetrührwerk wurde mit einer Drehzahl von 600 min⁻¹ gerührt. 1.75 g der zu dispergierenden Probe wurden zugegeben. Nach 1 min und 10 min wurde die Dispergierbarkeit beurteilt. Nach 10 min Rühren wurde die Korngrössenverteilung (d₅₀- und d₉₅-Wert) mit dem Cilas 1064 gemessen.

In Tabelle 4 sind die Ergebnisse der
Dispergierversuche mit den Trockensubstanzen der Beispiele 1 und 2 und des Vergleichsbeispiels 3 zusammengefasst.

**Tabelle 4**

| | Trockensubstanz aus | | | | | |
|---|---|---|---|---|---|---|
| | Beispiel 1 | | Beispiel 2 | | Vergleichs-beispiel 3 | |
| Diepergierbarkeit nach | | | | | | |
| 1 min | 95 | | 96 | | 2 | |
| 10 min | 98 | | 99 | | 5 | |
| Korngrösse [micrometer] | d₅₀ | d₉₅ | d₅₀ | d₉₅ | d₅₀ | d₉₅ |
| nach 10 min | 1,2 | 4,5 | 1,1 | 4,3 | - | - |
| ohne Ultraschall mit Ultraschall | 1,1 | 2, 8 | 1,0 | 2,4 | - | - |

Die Trockensubstanzen aus den Beispielen 1 und 2 zeigen mit Werten zwischen 95 und 99 eine ausgezeichnete Dispergierung.

Bei der Korngrösse nach 10 min Dispergierung erreicht die Trockensubstanz aus Beispiel 1 beim d₅₀-Wert mit 1,2 bzw. 1,1 µm (ohne bzw. mit Ultraschall) nahezu wieder die Korngrösse der ursprünglichen Dispersion von 1,0 µm (ohne und mit Ultraschall). Beim d₉₅-Wert sind die Abweichungen zur ursprünglichen Dispersion zwar grösser, mit einer mittleren Partikelgrösse von 4,5 bzw. 2,8 µm (ohne bzw. mit Ultraschall)jedoch immer noch sehr gut verarbeitbar.

Die Trockensubstanz aus Beispiel 2 zeigt im Dispersionstest durchwegs noch bessere Werte als diejenige des Beispiels 1.

Beim Vergleichsbeispiel 3 zeigt die Dispergierbarkeit von 2 bzw. 5, dass die aus einer Dispersion nach DE 199 13 042 A1 hergestellte Trockensubstanz keine für die Praxis ausreichende Dispergierbarkeit besitzt. Daher wurde auch auf die Korngrössenmessung nach 10 min Dispergierung verzichtet.

## Patentansprüche

1. Pulverförmiger, in Wasser dispergierbarer Haftvermittler für textile Verstärkungseinlagen bestehend aus
(A) 35 - 95 Gew.-% mindestens eines zumindest teilweise verkappten, niedermolekularen Isocyanats, wobei das zu verkappende Isocyanat eine Molmasse von weniger oder gleich 500 g/mol aufweist,
(B) 0,1 - 10 Gew.-% mindestens eines Netzmittels,
(C) 5 - 40 Gew.-% mindestens eines Bindemittels,
(D) 0 - 5 Gew.-% mindestens eines Katalysators und
(E) 0 - 10 Gew.-% mindestens eines Additivs,
wobei sich die Anteile der Komponenten (A) bis (E) zu 100 Gew.-% addieren.

2. Haftvermittler nach Anspruch 1,
**dadurch gekennzeichnet, dass** der Haftvermittler aus
(A) 52 - 90 Gew.-%, insbesondere 61 - 84 Gew.-% mindestens eines zumindest teilweise verkappten, niedermolekularen Isocyanats, wobei das zu verkappende Isocyanat eine Molmasse von weniger oder gleich 500 g/mol aufweist,
(B) 0,5 - 8 Gew.-%, insbesondere 1 - 6 Gew.-% mindestens eines Netzmittels,
(C) 10 - 30 Gew.-%, insbesondere 15 - 25 Gew.-% mindestens eines Bindemittels,
(D) 0,1 - 5 Gew.-%, insbesondere 0,5 - 4 Gew.-% mindestens eines Katalysators und
(E) 0,1 - 5 Gew.-%, insbesondere 0,2 - 4 Gew.-% mindestens eines Additivs,
besteht, wobei sich die Anteile der Komponenten (A) bis (E) zu 100 Gew.-% addieren.

3. Haftvermittler nach einem der vorhergehenden Ansprüche,
**dadurch gekennzeichnet, dass** das dispergierbare Pulver einen mittleren Partikeldurchmesser im Bereich von 50 bis 5000 µm, bevorzugt im Bereich von 100 bis 800 µm, besonders bevorzugt im Bereich von 200 bis 500 µm aufweist.

4. Haftvermittler nach einem der vorhergehenden Ansprüche,
**dadurch gekennzeichnet, dass** das mindestens eine zu verkappende niedermolekulare Isocyanat eine Molmasse im Bereich von 90 bis 400 g/mol, bevorzugt im Bereich von 150 bis 300 g/mol aufweist.

5. Haftvermittler nach einem der vorhergehenden Ansprüche,
**dadurch gekennzeichnet, dass** das mindestens eine zu verkappende niedermolekulare Isocyanat ein aromatisches, aliphatisches oder cycloaliphatisches Isocyanat ist, insbesondere ausgewählt aus der Gruppe bestehend aus
4,4-Diphenylmethandiisocyanat (4,4-MDI),
2,4-Diphenylmethandiisocyanat (2,4-MDI),
3,4-Diphenylmethandiisocyanat (3,4-MDI),
2,2-Diphenylmethan-diisocyanat (2,2-MDI),
2,3-Diphenylmethandiisocyanat (2,3-MDI),
2,4-Toluoldiisocyanat, 2,6-Toluoldiisocyanat,
1-Isocyanato-3-Isocyanatomethyl-3,5,5-Trimethylcyclohexan, 1,4-Naphthalindiisocyanat (1,4-NDI), 1,5-Naphthalindiisocyanat (1,5-NDI), Isophorondiisocyanat (IPDI), Hexamethylendiisocyanat (HDI) oder Mischungen hiervon.

6. Haftvermittler nach dem vorhergehenden Anspruch, **dadurch gekennzeichnet, dass** das mindestens eine zumindest teilweise verkappte, niedermolekulare Isocyanat teilweise oder vollständig blockiert ist, insbesondere mit einem Blockierungsmittel ausgewählt aus der Gruppe bestehend aus
Monophenolen, insbesondere Phenol, Resorcin, Kresol, Trimethylphenole oder tert. Butylphenole,
Lactamen, insbesondere ε-Caprolactam, δ-Valerolactam oder Laurinlactam,
Oximen, insbesondere Methyl-Ethyl-Ketoxim (Butanonoxim), Methyl-Amyl-Ketoxim oder Cyclohexanonoxim,
leicht enol-bildende Verbindungen, insbesondere Acetoessigester, Acetylaceton oder Malonsäurederivate,
primäre, sekundäre oder tertiäre Alkohole, Glykolether, sekundäre aromatische Amine, Imide, Merkaptane, Triazole sowie Mischungen hiervon.

7. Haftvermittler nach einem der vorhergehenden Ansprüche,
**dadurch gekennzeichnet, dass** das mindestens eine Netzmittel ausgewählt ist aus der Gruppe bestehend aus anionischen Tensiden, kationischen Tensiden, nicht-ionischen Tensiden, amphoteren Tensiden, siliciumhaltigen Tensiden, Perfluortensiden, hydrophil modifizierten Polyolefinen und Mischungen hiervon.

8. Haftvermittler nach Anspruch 7,
**dadurch gekennzeichnet, dass** die Tenside ausgewählt sind aus der Gruppe bestehend aus Seifen, Alkylbenzolsulfonate, lineare Alkylbenzolsulfonate, Alkansulfonate, Methylestersulfonate, α-Olefinsulfonate, Alkylsulfate, Fettalkoholsulfate, Fettalkoholethersulfate, Fettalkoholpolyglycol-ethersulfate, Fettalkoholpolyglycolether, Alkylphenolpolyglycolether, Sorbitanfettsäureester, ethoxylierte Sorbitanfettsäureester, Alkylpolyglucoside, Fettsäureglucamide, Fettsäureethoxylate, Fettaminethoxylate, ethoxylierte Triacylglycerole, beidseitig alkylierte Polyethylenglycolether, Alkoholethoxylate, Nonylphenolethoxylate, Polyglycerolfettsäureester, Fettsäurealkanolamide, Aminoxide, Alkyldimethylaminoxide, Alkylpolyglucoside, Saccharoseester, Sorbitanester, Fettsäureglucamide, Fettsäure-N-methylglucamide, Ampholyte, Betaine, Sulfobetaine, N-(Acylamido-alkyl)betaine, N-Alkyl-β-aminopropionate, N-Alkyl-β-iminopropionate, Salze langkettiger primärer Amine, quartäre Ammoniumsalze, quartäre Phosphoniumsalze, tertiäre Sulfoniumsalze, Pyridiniumsalze, Imidazoliniumsalze, Oxazoliniumsalze, Esterquats, Polyalkylenglycole, alkoxylierte Polyalkylenglycole, Polysulfone, Poly(2-hydroxyalkylacrylate), Poly(2-hydroxy-alkylmethacrylate), Ethylenoxid-Propylenoxid-Blockcopolymere, Polyethylenglycole, Polypropylenglycole, Polyethylenoxid-Harze, Polypropylenoxide, Salze von Oligophosphaten, Salze von Polyphosphaten und Mischungen hiervon.

9. Haftvermittler nach einem der vorhergehenden Ansprüche,
**dadurch gekennzeichnet, dass** das mindestens eine Bindemittel ausgewählt ist aus der Gruppe bestehend aus Vinylalkohol-Vinylacetat-Copolymere, Polyvinyl-pyrolidone, Polyvinylalkohole, Polyacrylsäuresalze, Salze von Polyacrylsäurecopolymeren, Polysaccharide, Stärke, Cellulose, Guar, Tragcantinsäure, Dextran, Alginate und deren Carboxymethyl-, Methyl-, Hydroxyethyl-, Hydroxypropyl-Derivate, Casein, Sojaprotein, Gelatine, Ligninsulfonate und Mischungen hiervon.

10. Haftvermittler nach einem der vorhergehenden Ansprüche,
**dadurch gekennzeichnet, dass** das mindestens eine Bindemittel ausgewählt ist aus der Gruppe bestehend aus Polyvinylalkohole, Polyacrylsäuresalze, Salze von Polyacrylsäurecopolymeren und Mischungen hiervon.

11. Haftvermittler nach einem der vorhergehenden Ansprüche,
**dadurch gekennzeichnet, dass** der mindestens eine Katalysator ausgewählt ist aus der Gruppe der Metallverbindungen der Metalle Natrium, Kalium, Cäsium, Strontium, Silber, Cadmium, Barium, Cer, Uran, Titan, Chrom, Zinn, Antimon, Mangan, Eisen, Kobalt, Nickel, Kupfer, Zink, Blei, Calcium und/oder Zirkon.

12. Haftvermittler nach einem der vorhergehenden Ansprüche,
**dadurch gekennzeichnet, dass** das mindestens eine Additiv ausgewählt ist aus der Gruppe bestehend aus
Entschäumern, insbesondere langkettigen Alkoholen, hochpolymeren Glykolen, Fettsäureethoxylaten, Trialkylmethylaminen, Siliconen oder Mischungen davon, besonders bevorzugt Silicone in Form von Silicon-Emulsionen,
Farbstoffen, insbesondere Ruß,
Füllstoffen, insbesondere Silikate,
sowie Mischungen hiervon.

13. Verfahren zur Herstellung eines pulverförmigen, in Wasser dispergierbaren Haftvermittlers für textile Verstärkungseinlagen mit folgenden Schritten:
1. Herstellung einer Dispersion unter Rühren aus (A) 35 - 95 Gew.-% mindestens eines zumindest teilweise verkappten, niedermolekularen Isocyanats mit einer Molmasse von weniger oder gleich 500 g/mol, (B) 0,1 - 10 Gew.-% mindestens eines Netzmittels, (C) 5 - 40 Gew.-% mindestens eines Bindemittels, (D) 0 - 5 Gew.-% mindestens eines Katalysators und (E) 0 - 10 Gew.-% mindestens eines Additivs,wobei sich die Anteile der Komponenten (A) bis (E) zu 100 Gew.-% addieren,
2. Mahlen der Dispersion und
3. Trocknen der Dispersion.

14. Verwendung des Haftvermittlers nach einem der vorhergehenden Ansprüche für die Behandlung von Verstärkungseinlagen zur Herstellung von verstärkten Gummiprodukten.

## Claims

1. Powdered bonding agent dispersible in water for textile reinforcing inserts, consisting of
(A) 35-95% by weight of at least one at least partially capped, low-molecular-weight isocyanate, wherein the isocyanate to be capped has a molecular weight of less than or equal to 500g/mol,
(B) 0.1-10% by weight of at least one wetting agent,
(C) 5-40% by weight of at least one binding agent,
(D) 0-5% by weight of at least one catalyst
and
(E) 0-10% by weight of at least one additive,
wherein the proportions of components (A) to (E) add up to 100% by weight.

2. Bonding agent according to claim 1,
**characterised in that** the bonding agent consists of
(A) 52-90% by weight, in particular 61-84% by weight, of at least one at least partially capped, low-molecular-weight isocyanate, wherein the isocyanate to be capped has a molecular weight of less than or equal to 500g/mol,
(B) 0.5-8% by weight, in particular 1-6% by weight, of at least one wetting agent,
(C) 10-30% by weight, in particular 15-25% by weight, of at least one binding agent,
(D) 0.1-5% by weight, in particular 0.5-4% by weight, of at least one catalyst and
(E) 0.1-5% by weight, in particular 0.2-4% by weight, of at least one additive,
wherein the proportions of components (A) to (E) add up to 100% by weight.

3. Bonding agent according to one of the preceding claims,
**characterised in that** the dispersible powder has an average particle diameter in the range from 50 to 5000µm, preferably in the range from 100 to 800µm, particularly preferably in the range from 200 to 500µm.

4. Bonding agent according to one of the preceding claims,
**characterised in that** the at least one low molecular weight isocyanate to be capped has a molecular weight in the range from 90 to 400g/mol, preferably in the range from 150 to 300g/mol.

5. Bonding agent according to one of the preceding claims,
**characterised in that** the at least one low molecular weight isocyanate to be capped is an aromatic, aliphatic or cycloaliphatic isocyanate, in particular selected from the group consisting of
4,4-diphenylmethane diisocyanate (4,4-MDI),
2,4-diphenylmethane diisocyanate (2,4-MDI),
3,4-diphenylmethane diisocyanate (3,4-MDI),
2,2-diphenylmethane diisocyanate (2,2-MDI),
2,3-diphenylmethane diisocyanate (2,3-MDI),
2,4-toluene diisocyanate, 2,6-toluene diisocyanate,
1-isocyanato-3- isocyanatomethyl-3,5,5- trimethylcyclohexane, 1,4- naphthalene diisocyanate (1,4-NDI), 1,5 naphthalene diisocyanate (1,5-NDI), isophorone diisocyanate (IPDI), hexamethylene diisocyanate (HDI) or mixtures thereof.

6. Bonding agent according to one of the preceding claims,
**characterised in that** the at least one at least partially capped, low-molecular-weight isocyanate is partially or completely blocked, in particular with a blocking agent selected from the group consisting of monophenols, in particular phenol, resorcinol, cresol, trimethylphenols or tert butylphenoles, lactams, in particular ε-caprolactam, δ-valerolactam or laurolactam,
oximes, in particular methyl ethyl ketoxime (butanoneoxime), methyl amyl ketoxime or cyclohexanone oxime,
compounds easily forming enol, in particular acetoacetic esters, acetylacetone or malonic acid derivatives,
primary, secondary or tertiary alcohols, glycolethers, secondary aromatic amines, imides, mercaptans, triazoles as well as mixtures thereof.

7. Bonding agent according to one of the preceding claims,
**characterised in that** the at least one wetting agent is selected from the group consisting of anionic surfactants, cationic surfactants, non-ionic surfactants, amphoteric surfactants, surfactants containing silicon, perfluoro surfactants, hydrophilically modified polyolefins and mixtures thereof.

8. Bonding agent according to claim 7,
**characterised in that** the surfactants are selected from the group consisting of soaps, alkylbenzene sulphonates, linear alkylbenzene sulphonates, alkane sulphonates, methyl ester sulphonates, α-olefin sulphonates, alkyl sulphates, fatty alcohol sulphates, fatty alcohol ether sulphates, fatty alcohol polyglycol ether sulphates, fatty alcohol polyglycol ethers, alkylphenol polyglycol ethers, sorbitan fatty acid esters, ethoxylated sorbitan fatty acid esters, alkyl polyglucosides, fatty acid glucamides, fatty acid ethoxylates, fatty amine ethoxylates, ethoxylated triacylglycerols, polyethylene glycol ethers alkylated on both sides, alcohol ethoxylates, nonylphenol ethoxylates, polyglycerol fatty acid esters, fatty acid alkanolamides, amine oxides, alkyl dimethyl amine oxides, alkyl polyglycosides, sucrose esters, sorbitan esters, fatty acid glucamides, fatty acid-N-methylglucamides, ampholytes, betaines, sulfobetaines, N-(acylamidoalkyl)betaines, N-alkyl-β-aminopropionates, N-alkyl-β-iminopropionates, salts of long-chain primary amines, quarternary ammonium salts, quarternary phosphonium salts, teriary sulfonium salts, pyridinium salts, imidazolinium salts, oxazolinium salts, esterquats, polyalkylene glycols, alkoxylated polyalkylene glycols, polysulphones, poly(2- hydroxy alkyl acrylates, poly(2- hydroxy alkyl methacrylates), ethylene oxide- propylene oxide- block copolymers, polyethylene glycols, polypropylene glycols, polyethylene oxide resins, polypropylene oxides, salts from oligophosphates, salts from polyphosphates and mixtures thereof.

9. Bonding agent according to one of the preceding claims,
**characterised in that** the at least one binding agent is selected from the group consisting of vinyl alcohol- vinyl acetate-copolymers, polyvinyl-pyrrolidones, polyvinyl alcohols, polyacrylic acid salts, salts from polyacrylic acid copolymers, polysaccharides, amylum, cellulose, guar, tragacanth acid, dextran, alginates, and carboxymethyl-, methyl-, hydroxyethyl-, hydroxypropyl-derivatives thereof, casein, soy protein, gelatine, lignosulphonates and mixtures thereof.

10. Bonding agent according to one of the preceding claims,
**characterised in that** the at least one binding agent is selected from the group consisting of polyvinyl alcohols, polyacrylic acid salts, salts from polyacrylic acid copolymers and mixtures thereof.

11. Bonding agent according to one of the preceding claims,
**characterised in that** the at least one catalyst is selected from the group of metal compounds of the metals sodium, potassium, caesium, strontium, silver, cadmium, barium, cerium, uranium, titanium, chromium, tin, antimony, manganese, iron, cobalt, nickel, copper, zinc, lead, calcium, and/or zirconium.

12. Bonding agent according to one of the preceding claims,
**characterised in that** the at least one additive is selected from the group consisting of defoamers, in particular long-chain alcohols, high-polymer glycols, fatty acid ethoxylates, trialkyl methylamines, silicones or mixtures thereof, particularly preferably silicones in the form of silicone emulsions, dyes, in particular carbon black, fillers, in particular silicates, as well as mixtures thereof.

13. Method for the production of a powdered bonding agent dispersible in water for textile reinforcing inserts, having the following steps:
1. Production of a dispersion by stirring from
(A) 35-95% by weight of at least one at least partially capped, low molecular weight isocyanate having a molecular weight of less than or equal to 500g/mol,
(B) 0.1-10% by weight of at least one wetting agent, (C) 5-40% by weight of at least one binding agent, (D) 0-5% by weight of at least one catalyst and (E) 0-10% by weight of at least one additive, wherein the proportions of the components (A) to (E) add up to 100% by weight,
2. Grinding of the dispersion and
3. Drying of the dispersion.

14. Use of the bonding agent according to one of the preceding claims for the handling of textile reinforcing inserts for the production of reinforced rubber products.

## Revendications

1. Promoteur d'adhérence pulvérulent dispersible dans l'eau pour des triplures de renforcement textiles, consistant en :
(A) 35-95 % en poids d'au moins un isocyanate à faible masse molaire, au moins partiellement coiffé, l'isocyanate à coiffer ayant une masse molaire inférieure ou égale à 500 g/mol,
(B) 0,1-10 % en poids d'au moins un mouillant,
(C) 5-40 % en poids d'au moins un liant,
(D) 0-5 % en poids d'au moins un catalyseur, et
(E) 0-10 % en poids d'au moins un additif,
la somme des proportions des composants (A) à (E) étant de 100 % en poids.

2. Promoteur d'adhérence selon la revendication 1, **caractérisé en ce que** le promoteur d'adhérence a la constitution suivante :
(A) 52-90 % en poids, en particulier 61-84 % en poids d'au moins un isocyanate à faible masse molaire au moins partiellement coiffé, l'isocyanate à coiffer ayant une masse molaire inférieure ou égale à 500 g/mol,
(B) 0,5-8 % en poids, en particulier 1-6 % en poids d'au moins un mouillant,
(C) 10-30 % en poids, en particulier 15-25 % en poids d'au moins un liant,
(D) 0,1-5 % en poids, en particulier 0,5-4 % en poids d'au moins un catalyseur, et
(E) 0,1-5 % en poids, en particulier 0,2-4 % en poids d'au moins un additif,
la somme des proportions des composants (A) à (E) étant de 100 % en poids.

3. Promoteur d'adhérence selon l'une des revendications précédentes, **caractérisé en ce que** la poudre dispersible présente une granulométrie moyenne comprise dans la plage allant de 50 à 5000 µm, de préférence dans la plage allant de 100 à 800 µm, d'une manière particulièrement préférée dans la plage allant de 200 à 500 µm.

4. Promoteur d'adhérence selon l'une des revendications précédentes, **caractérisé en ce que** le ou les isocyanates à faible masse molaire à coiffer ont une masse molaire comprise dans la plage allant de 90 à 400 g/mol, de préférence dans la plage allant de 150 à 300 g/mol.

5. Promoteur d'adhérence selon l'une des revendications précédentes, **caractérisé en ce que** le ou les isocyanates à faible masse molaire à coiffer sont des isocyanates aromatiques, aliphatiques ou cycloaliphatiques, choisis en particulier dans le groupe consistant en le diisocyanate de 4,4-diphénylméthane (4,4-MDI), le diisocyanate de 2,4-diphénylméthane (2,4-MDI), le diisocyanate de 3,4-diphénylméthane (3,4-MDI), le diisocyanate de 2,2-diphénylméthane (2,2-MDI), le diisocyanate de 2,3-diphénylméthane (2,3-MDI), le diisocyanate de 2,4-toluène, le diisocyanate de 2,6-toluène, le 1-isocyanato-3-isocyanatométhyl-3,5,5-triméthylcyclohexane, le diisocyanate de 1,4-naphtalène (1,4-MDI), le diisocyanate de 1,5-naphtalène (1,5-MDI), le diisocyanate d'isophorone (IPDI), le diisocyanate d'hexaméthylène (HDI) ou les mélanges de ceux-ci.

6. Promoteur d'adhérence selon la revendication précédente, **caractérisé en ce que** le ou les isocyanates à faible masse molaire au moins partiellement coiffés sont en totalité ou en partie bloqués, en particulier par un agent bloquant choisi dans le groupe consistant en les monophénols, en particulier le phénol, le résorcinol, le crésol, les triméthylphénols ou les tert-butylphénols ; les lactames, en particulier l'ε-caprolactame, le δ-valérolactame ou le laurinelactame ; les oximes, en particulier la méthyléthylcétoxime (butanonoxime), la méthylamylcétoxime ou la cyclohexanonoxime ; les composés facilement générateurs d'énols, en particulier les esters de l'acide acétoacétique, l'acétylacétone ou les dérivés de l'acide malonique ; les alcools primaires, secondaires ou tertiaires ; les glycoléthers, les amines aromatiques secondaires, les imides, les mercaptans, les triazoles ainsi que les mélanges de ceux-ci.

7. Promoteur d'adhérence selon l'une des revendications précédentes, **caractérisé en ce que** le ou les mouillants sont choisis dans le groupe consistant en les tensioactifs anioniques, les tensioactifs cationiques, les tensioactifs non-ioniques, les tensioactifs amphotères, les tensioactifs contenant du silicium, les tensioactifs perfluorés, les polyoléfines à modification hydrophile et les mélanges de ceux-ci.

8. Promoteur d'adhérence selon la revendication 7, **caractérisé en ce que** les tensioactifs sont choisis dans le groupe consistant en les savons, les alkylbenzènesulfonates, les alkylbenzènesulfonates linéaires, les alcanesulfonates, les (ester méthylique)-sulfonates, les α-oléfinesulfonates, les alkylsulfates, les (alcool gras)sulfates, les (alcool gras)éthersulfates, les (alcool gras)polyglycoléthersulfates, les (alcool gras)polyglycoléthers, les alkylphénolpolyglycoléthers, les esters d'acides gras du sorbitan, les esters d'acides gras du sorbitan éthoxylés, les alkylpolyglucosides, les glucamides d'acides gras, les produits d'éthoxylation d'acides gras, les produits d'éthoxylation d'amines grasses, les triacylglycérols éthoxylés, les polyéthylèneglycoléthers alkylés des deux côtés, les alcools éthoxylés, les produits d'éthoxylation du nonylphénol, les esters d'acides gras du polyglycérol, les alcanolamides d'acides gras, les oxydes d'amine, les oxydes d'alkyldiméthylamine, les alkylpolyglucosides, les esters du saccharose, les esters du sorbitan, les glucamides d'acides gras, les N-méthylglucamides d'acides gras, les ampholytes, les bétaïnes, les sulfobétaïnes, les N-(acylamidoalkyl)bétaïnes, les β-aminopropionates de N-alkyle, les β-iminopropionates de N-alkyle, les sels d'amines primaires à longue chaîne, les sels de l'ammonium quaternaire, les sels du phosphonium quaternaire, les sels du sulfonium tertiaire, les sels de pyridinium, les sels d'imidazolinium, les sels d'oxazolinium, les esterquats, les polyalkylèneglycols, les polyalkylèneglycols alcoxylés, les polysulfones, les poly(acrylates de 2-hydroxyalkyle), les poly(méthacrylates de 2-hydroxyalkyle), les copolymères à blocs oxyde d'éthylène-oxyde de propylène, les polyéthylèneglycols, les polypropylèneglycols, les résines d'oxyde de polyéthylène, les oxydes de polypropylène, les sels d'oligophosphates, les sels de polyphosphates et les mélanges de ceux-ci.

9. Promoteur d'adhérence selon l'une des revendications précédentes, **caractérisé en ce que** le ou les liants sont choisis dans le groupe consistant en les copolymères alcool vinylique-acétate de vinyle, les polyvinylpyrrolidones, les poly(alcools vinyliques), les poly(sels de l'acide acrylique), les sels de copolymères du poly(acide acrylique), les polysaccharides, l'amidon, la cellulose, la gomme de guar, l'acide tragacanthique, le dextran, les alginates et leurs dérivés carboxyméthyliques, méthyliques, hydroxyéthyliques, hydroxypropyliques, la caséine, la protéine de soja, la gélatine, les ligninesulfonates et les mélanges de ceux-ci.

10. Promoteur d'adhérence selon l'une des revendications précédentes, **caractérisé en ce que** le ou les liants sont choisis dans le groupe consistant en les poly(alcools vinyliques), les poly(sels de l'acide acrylique), les sels de copolymères de poly(acide acrylique) et les mélanges de ceux-ci.

11. Promoteur d'adhérence selon l'une des revendications précédentes, **caractérisé en ce que** le ou les catalyseurs sont choisis dans le groupe des composés métalliques des métaux sodium, potassium, césium, strontium, argent, cadmium, baryum, cérium, uranium, titane, chrome, étain, antimoine, manganèse, fer, cobalt, nickel, cuivre, zinc, plomb, calcium et/ou zirconium.

12. Promoteur d'adhérence selon l'une des revendications précédentes, **caractérisé en ce que** le ou les additifs sont choisis dans le groupe consistant en les antimoussants, en particulier les alcools à longue chaîne, les glycols à grande masse molaire, les produits d'éthoxylation d'acides gras, les trialkylméthylamines, les silicones ou les mélanges de ceux-ci, d'une manière particulièrement préférée les silicones sous forme d'émulsions de silicone, les colorants, en particulier le noir de carbone, les matières de charge, en particulier les silicates, ainsi que les mélanges de ceux-ci.

13. Procédé de fabrication d'un promoteur d'adhérence pulvérulent dispersible dans l'eau pour des triplures de renforcement textiles, comportant les étapes suivantes :
1. fabrication d'une dispersion sous agitation de (A) 35-95 % en poids d'au moins un isocyanate à faible masse molaire, au moins partiellement coiffé, ayant une masse molaire inférieure ou égale à 500 g/mol, (B) 0,1-10 % en poids d'au moins un mouillant, (C) 5-40 % en poids d'au moins un liant, (D) 0-5 % en poids d'au moins un catalyseur, et (E) 0-10 % en poids d'au moins un additif, la somme des proportions des composants (A) à (E) étant de 100 % en poids,
2. broyage de la dispersion, et
3. séchage de la dispersion.

14. Utilisation du promoteur d'adhérence selon l'une des revendications précédentes pour le traitement de triplures de renforcement dans le but de fabriquer des produits de caoutchouc renforcés.
